# EUROPÄISCHE PATENTSCHRIFT

(11) **EP 1 779 720 B1**
(45) Veröffentlichungstag und Bekanntmachung des Hinweises auf die Patenterteilung: **26.03.2008**
(21) Anmeldenummer: 05023358.4
(22) Anmeldetag: 26.10.2005
(51) Int. Cl.: A01G 31/02, A01G 7/04

(54) **Begehbare Vorrichtung zum Züchten von Pflanzen**
Accessible device for growing plants
Appareil accessible pour la culture des plantes

(43) Veröffentlichungstag der Anmeldung: 02.05.2007
(73) Patentinhaber: Feuz, Alain, 3038 Kirchlindach (CH)
(72) Erfinder: Feuz, Alain, 3038 Kirchlindach (CH)
(74) Vertreter: Goy, Wolfgang

(56) Entgegenhaltungen:
- DE-C1- 4 411 226
- FR-A- 2 680 627
- RU-C1- 2 028 771
- RU-C1- 2 034 447

## Beschreibung

Die Erfindung betrifft eine begehbare Vorrichtung zum Züchten von Pflanzen nach dem Oberbegriff des Anspruchs 1.

Die erfindungsgemäße Anlage zum Züchten von Pflanzen betrifft ein Pflanzenzuchtsystem für den Innenbereich. Dies bedeutet, daß das Pflanzenzuchtsystem begehbar ist.

Begehbare Vorrichtungen zum Züchten von Pflanzen sind bekannt. Sie weisen eine gestellartige Einrichtung zur Aufnahme von einzelnen Pflanzen auf. Da Pflanzen für ihr Wachstum Licht benötigen, ist zusätzlich noch eine Beleuchtungseinrichtung zum Beleuchten der Pflanzen vorgesehen. Der Nachteil der bekannten Anlagen besteht darin, daß die Anbaufläche relativ gering und auf die Grundfläche der Anlage beschränkt ist. Weiterhin ist der Energieaufwand für die Beleuchtungseinrichtung vergleichsweise hoch

Die RU-C1-2 028 771 zeigt eine Vorrichtung zum Züchten von Pflanzen der eingangs angegebenen Art. Zu diesem Zweck ist ein liegendes, zylinderförmiges Gehäuse vorgesehen. Dieses besitzt im Bodenbereich eine Wanne zur Aufnahme eines Nährsubstrats. Im Innern des zylinderförmigen Gehäuses befindet sich eine ebenfalls zylindrische Trommel, welche koaxial zu dem äußeren Gehäuse angeordnet ist. Diese innere Trommel ist mit Zellen um die gesamte Innenmantelfläche herum bestückt. Diese Zellen dienen zur Aufzucht der Pflanzen. In der Achse des Gehäuses bzw. der Trommel befindet sich eine Beleuchtungseinrichtung. Während des Betriebs dieser Vorrichtung zum Züchten von Pflanzen führt die Trommel eine Drehbewegung aus. Dabei tauchen die Wurzeln der Pflanzen in das Nährsubstrat der bodenseitigen Wanne. - In diese Vorrichtung kann zwar hineingekrochen werden, doch im eigentlichen Sinne begehbar ist sie nicht.

Davon ausgehend liegt der Erfindung die **Aufgabe** zugrunde, eine ohne weiteres begehbare Vorrichtung zum Züchten von Pflanzen mit höherer Wirtschaftlichkeit zu schaffen.

Die technische **Lösung** ist gekennzeichnet durch die Merkmale im Kennzeichen des Anspruchs 1.

Dadurch ist ein Pflanzenzuchtsystem für den Innenbereich mit höchster Wirtschaftlichkeit geschaffen. Die Grundidee besteht in einer mittigen, zentralen Beleuchtungseinrichtung, um die herum ein Gestell angeordnet ist, welches die Pflanzen aufnimmt. Durch diese Konstruktion verdoppelt sich in etwa die Anbaufläche im Vergleich zur Grundfläche der Vorrichtung.

Weiterhin reduziert sich durch das zentrale Leuchtmittel der Energieaufwand auf ein Bruchteil der bekannten Vorrichtungen. Die Pflanzen sind dabei in einzelnen Töpfen angebaut und können in dem Gestell versetzt oder ersetzt werden. Anstelle von Töpfen können z. B. aber auch Steinwollelemente eingesetzt werden. Die Beleuchtungseinrichtung befindet sich dabei in der Mittelachse. Bei dem Zylindermantel handelt es sich um ein rundes Gebilde, während es sich bei dem Polygonmantel um ein mehreckiges Gebilde handelt, wobei eine Mehrzahl von senkrechten Mantelflächen oder Mantelelementen das Polygon bilden. Beispielsweise kann es sich bei dem Polygon um ein Quadrat handeln.

Die Weiterbildung gemäß Anspruch 2 stellt eine erste Variante des Zylinder- oder Polygonmantels dar, indem der Mantel von vornherein eine Mantelöffnung aufweist. Bei dieser Mantelöffnung kann es sich um einen Art Spalt im Mantel handeln. Diese Mantelöffnung definiert den Zutrittsbereich ins Innere der Vorrichtung.

Eine bevorzugte, zweite Variante schlägt Anspruch 3 vor. Dadurch wird der Umfangsbereich um die zentrale Beleuchtungseinrichtung herum optimal genutzt, da der Mantel um den gesamten Umfang herum in der Betriebsstellung geschlossen ist. Lediglich für Wartungs- und Kontrollarbeiten wird der Mantel geöffnet und kann auf diese Weise zugänglich gemacht werden.

Grundsätzlich ist es möglich, daß nur ein einziges Mantelsegment beweglich ist. Eine Weiterbildung schlägt jedoch gemäß Anspruch 4 vor, daß der Zylinder- oder Polygonmantel aus mehreren Mantelsegmenten besteht, welche von der zentralen Mitte weg bewegbar sind. Dadurch wird der komplette Mantel geöffnet und ist von mehreren Seiten zugänglich. Vor allem aber hat diese Verfahrbarkeit der Mantelsegmente den Vorteil, daß die Distanz der Pflanzen zur zentralen Beleuchtungseinrichtung variabel ist, so daß diese Distanz entsprechend den Lichtbedürfnissen der Pflanzen der Größe angepaßt werden kann. Sofern es sich bei dem Mantel um einen Zylindermantel handelt, sind wenigstens zwei Mantelsegmente vorgesehen. Diese besitzen dann einen Öffnungswinkel von 180°. Es sind aber auch drei oder vier oder noch mehr Mantelsegmente denkbar.

Eine erste technische Realisierung bezüglich der Bewegbarkeit der Mantelsegmente sieht gemäß Anspruch 5 vor, daß die Mantelsegmente auf Bodenrollen verfahrbar sind. Dies stellt die einfachste technische Realisierung dar, da es lediglich erforderlich ist, die Metallsegmente mit Bodenrollen zu versehen.

Eine Alternative zu diesen Bodenrollen schlägt Anspruch 6 vor. Das Grundprinzip besteht in einem oberseitigen Schienensystem, an welchem die Mantelsegmente aufgehängt und längs diesen verfahrbar sind. Es kann sich dabei bei diesem Schienensystem um einen auf dem Boden stehenden Stahlrohrrahmen handeln. Alternativ ist es denkbar, daß die Schienen an der Decke montiert sind.

Zur Schaffung einer großflächigen Plantage insbesondere in einer Halle ist gemäß der Weiterbildung in Anspruch 7 oberseitig ein Netz von Schienen vorgesehen, an welchen die Mantelsegmente einer Mehrzahl von Züchtungsvorrichtungen verfahrbar aufgehängt sind. In jedem Kreuzungspunkt der Schienen befindet sich dabei eine Züchtungsvorrichtung. Das Schienennetz ist dabei rechtwinklig aufgebaut.

Gemäß der Weiterbildung in Anspruch 8 handelt es sich bei dem Gestell um ein Drahtgestell. Dies bedeutet, daß die Aufnahme der Pflanzen Drahtkäfige sind. Diese können z. B. aus Kunststoff- oder Blechelementen hergestellt werden.

Schließlich schlägt die Weiterbildung gemäß Anspruch 9 vor, daß das Gestell unterseitig eine Auffangwanne für Wasser aufweist. Diese Auffangwannen dienen zur Aufnahme von überschüssigem Gießwasser. Unabhängig von diesen Gießwannen kann das System durch ein Einzeltopfbewässerungssystem ergänzt werden.

Vier Ausführungsbeispiele einer erfindungsgemäßen begehbaren Vorrichtung zum Züchten von Pflanzen werden nachfolgend anhand der Zeichnungen beschrieben. In diesen zeigt:
- Fig. 1a bis c: eine erste Ausführungsform der Züchtvorrichtung mit Bodenrollen im geschlossenen Zustand;
- Fig. 1d bis f: die Züchtvorrichtung in Fig. 1a bis c in entsprechenden Darstellungen im geöffneten Zustand;
- Fig. 2a: eine perspektivische Ansicht eines Teils des Gestells der Züchtvorrichtung;
- Fig. 2b: eine Seitenansicht des Gestells in Fig. 2a;
- Fig. 3a bis c: eine zweite Ausführungsform der Züchtvorrichtung mit einem Schienensystem mit oberseitigem Stahlrohrrahmen im geschlossenen Zustand;
- Fig. 3d bis f: die Züchtvorrichtung in Fig. 3a bis c in entsprechenden Darstellungen im geöffneten Zustand;
- Fig. 4a bis c: eine dritte Ausführungsform der Züchtvorrichtung mit einem Schienensystem in Deckenmontage im geschlossenen Zustand;
- Fig. 4d bis f: die Züchtvorrichtung in Fig. 4a bis c in entsprechenden Darstellungen im geöffneten Zustand;
- Fig. 5a bis c: eine vierte Ausführungsform der Züchtvorrichtung basierend auf dem System in Fig. 4a bis f mit einem Netzsystem von Schienen mit einer Mehrzahl von einzelnen Züchtungsvorrichtungen.

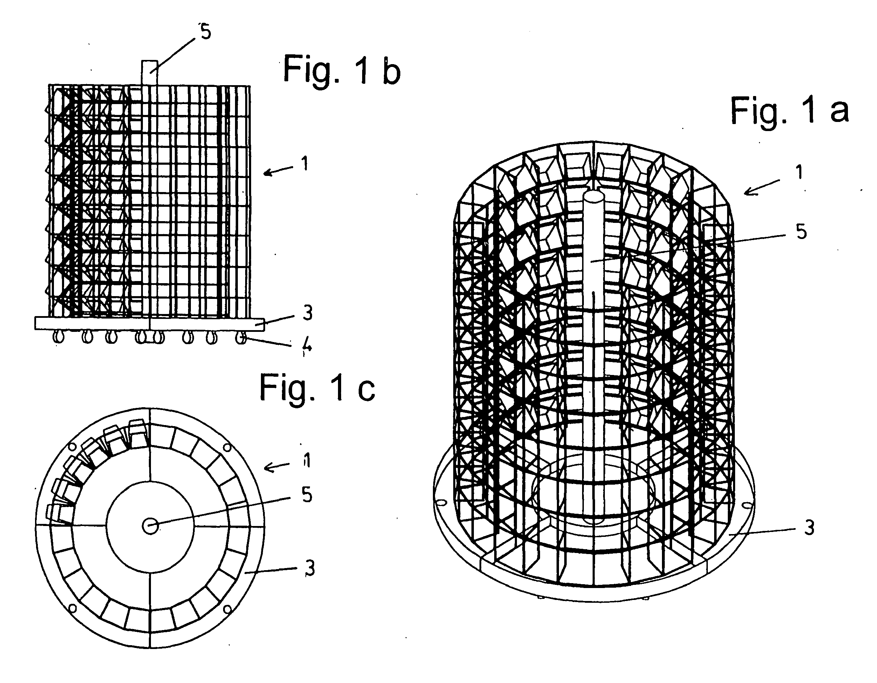

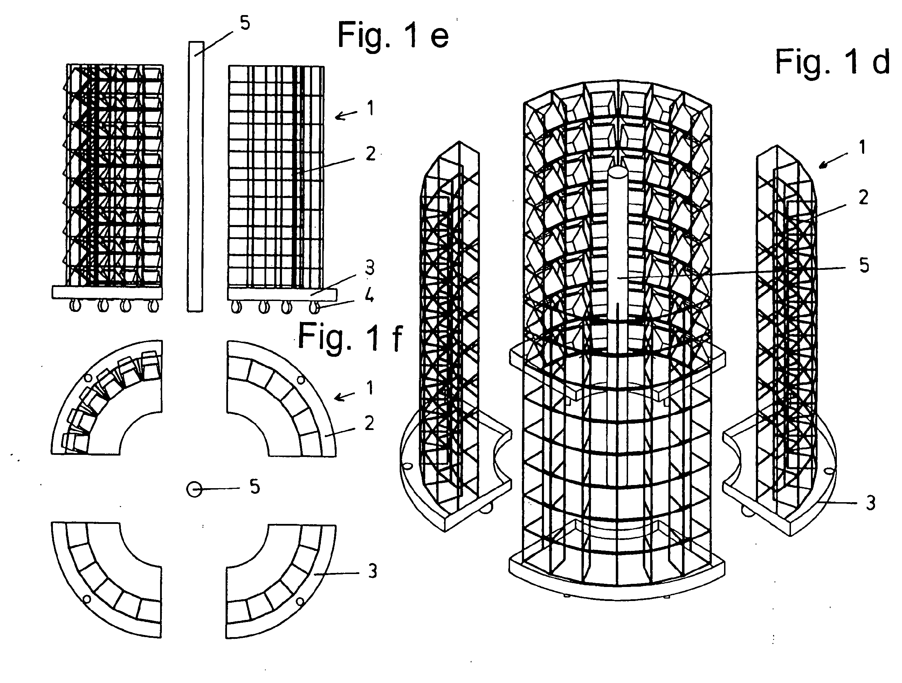

Die Züchtungsvorrichtung in Fig. 1a bis c der ersten Ausführungsform weist ein zylinderförmiges Gestell 1 in Form eines Drahtgestells mit einer vertikalen, senkrechten Mittelachse auf. Dieses zylinderförmige Gestell 1 ist in vier unabhängige Mantelsegmente 2 unterteilt. Jedes dieser Mantelsegmente 2 steht auf einer Auffangwanne 3 für Gießwasser. Unterseitig sind die Mantelsegmente 2 bzw. die Auffangwannen 3 mit Bodenrollen 4 versehen. Zentral in der Mitte befindet sich eine Beleuchtungseinrichtung 5.

### Die Funktionsweise ist wie folgt:

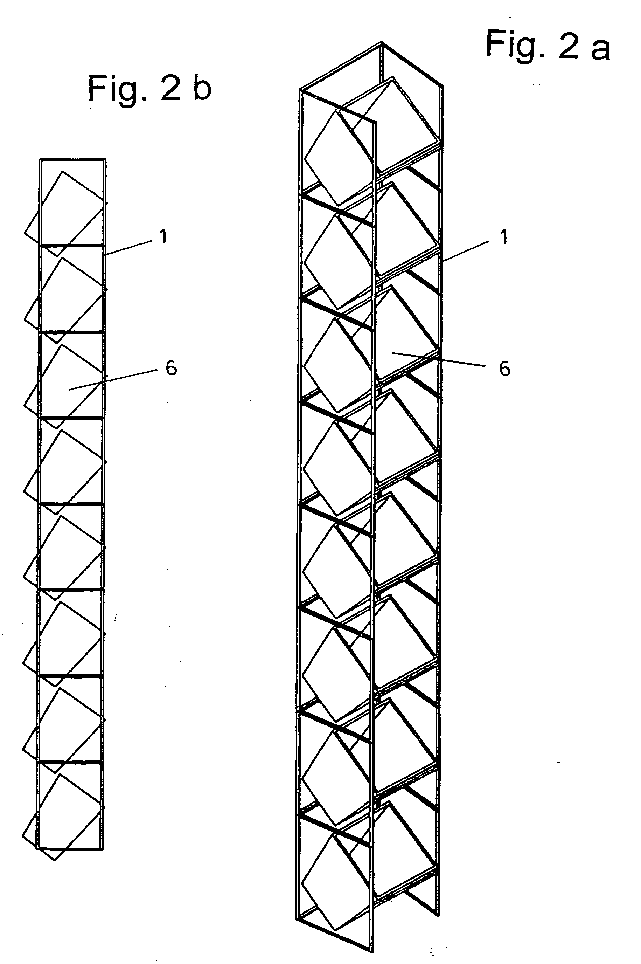

Das Gestell 1 dient zur Aufnahme einer Mehrzahl von Pflanztöpfen 6. Wie in Fig. 2a und b erkennbar ist, sind diese Pflanztöpfe 6 in dem Gestell 1 schräg angeordnet, und zwar so, daß die - nicht dargestellten - Pflanzen hin zur mittigen Beleuchtungsvorrichtung 5 gerichtet sind.

In der Grundstellung ist das Gestell 1 mit seinen Mantelsegmenten 2 geschlossen, wie dies in Fig. 1a bis c erkennbar ist. Für Wartungs- und Kontrollarbeiten können die Mantelsegmente 2 radial nach außen verfahren werden, wie dies in Fig. 1d bis f dargestellt ist. Dadurch ist das Innere des Zylinders zugänglich. Mit diesem Verfahrsystem ist es darüber hinaus möglich, die Distanz der Pflanzen von der zentralen Beleuchtungsvorrichtung 5 variabel zu gestalten, um so die Lichtintensität an die Größe der Pflanzen anzupassen.

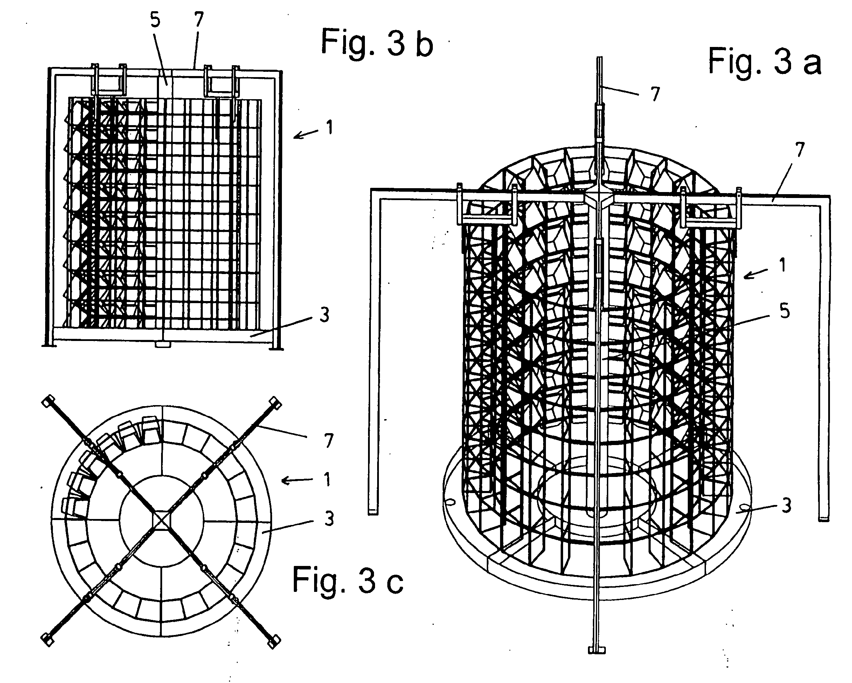

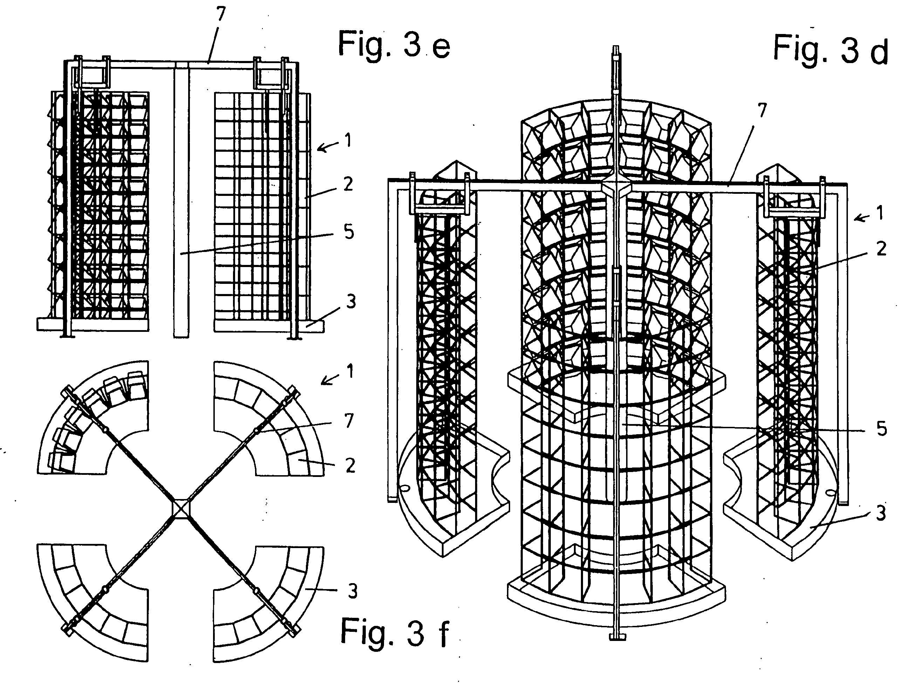

Die zweite Ausführungsform in Fig. 3a bis f unterscheidet sich von der ersten Ausführungsform in Fig. 1a bis f durch die Verfahreinrichtung für die Mantelsegmente 2. Statt Bodenrollen 4 sind hier Schienen 7 vorgesehen, welche Teil eines Stahlrohrrahmens gebildet sind. Die Mantelsegmente 2 hängen dabei an den oberseitigen, horizontalen Schienen 7 und können mittels einer entsprechenden Verfahreinrichtung entweder von Hand oder motorisch längs der Schienen 7 verfahren werden.

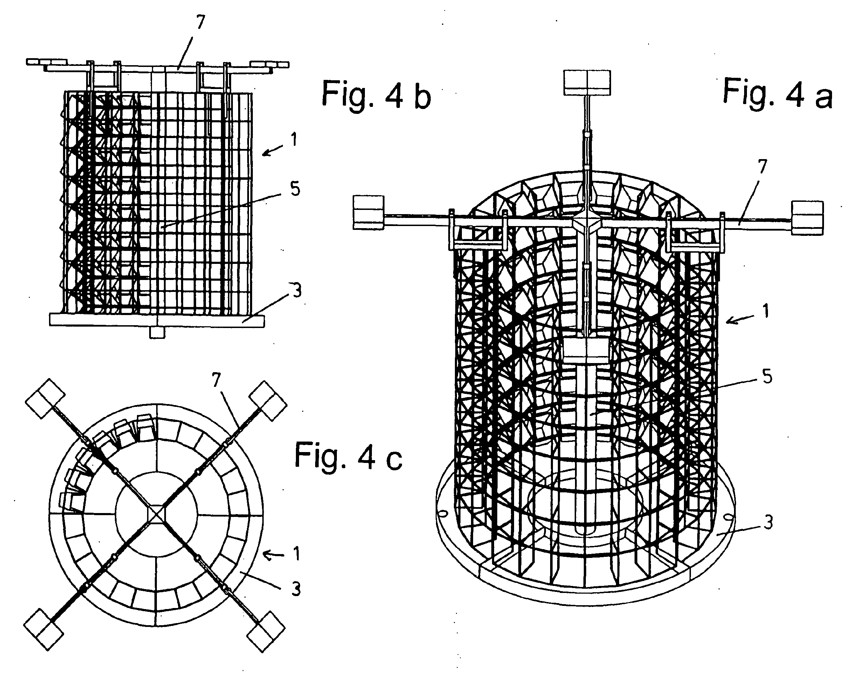

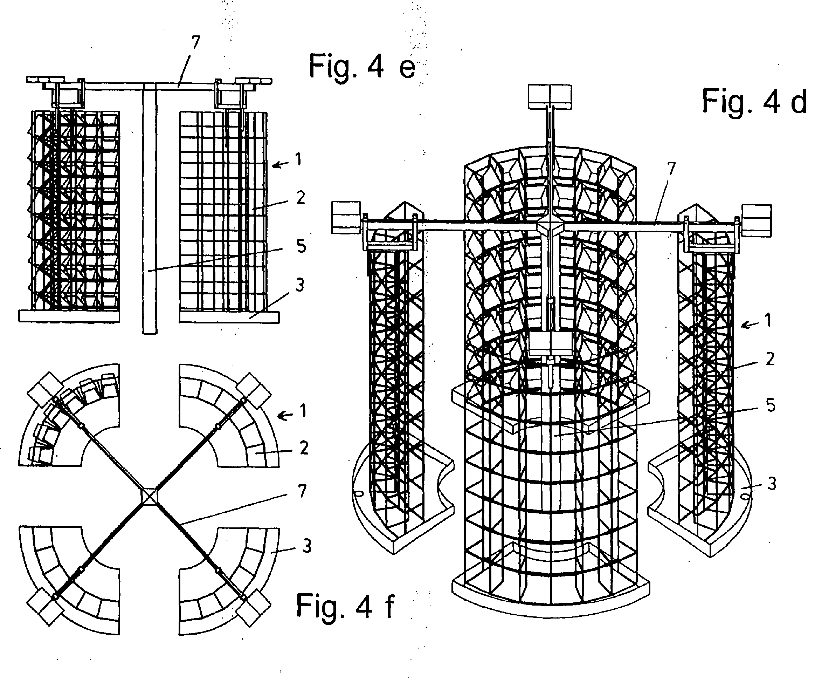

Die dritte Ausführungsform in Fig. 4a bis f sieht als Verfahreinrichtung ebenfalls ein Schienensystem vor. Hier sind die Schienen 7 jedoch an der Decke des Gebäudes angeordnet. Somit hängen auch hier die Mantelsegmente 2 an den Schienen 7 und können radial verfahren werden.

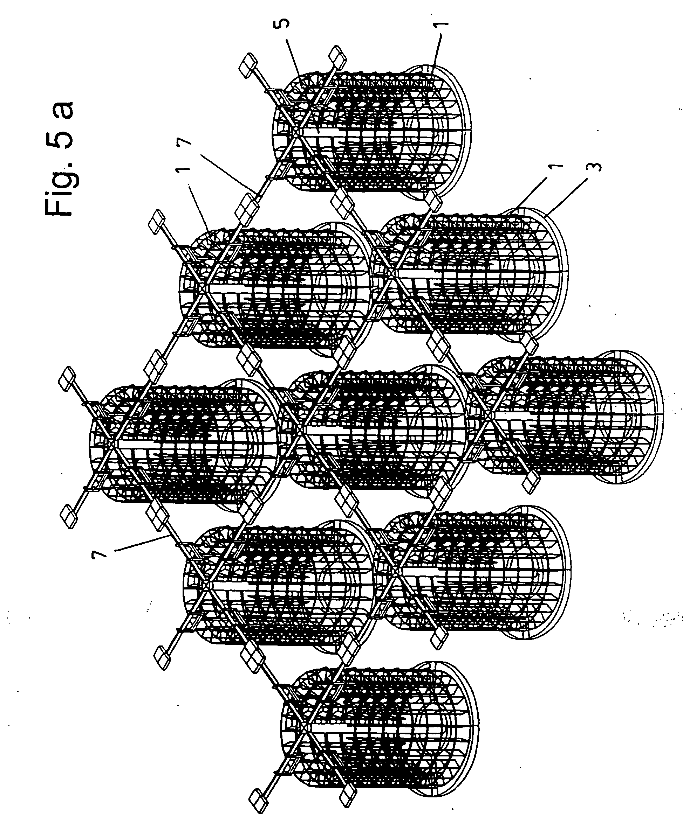

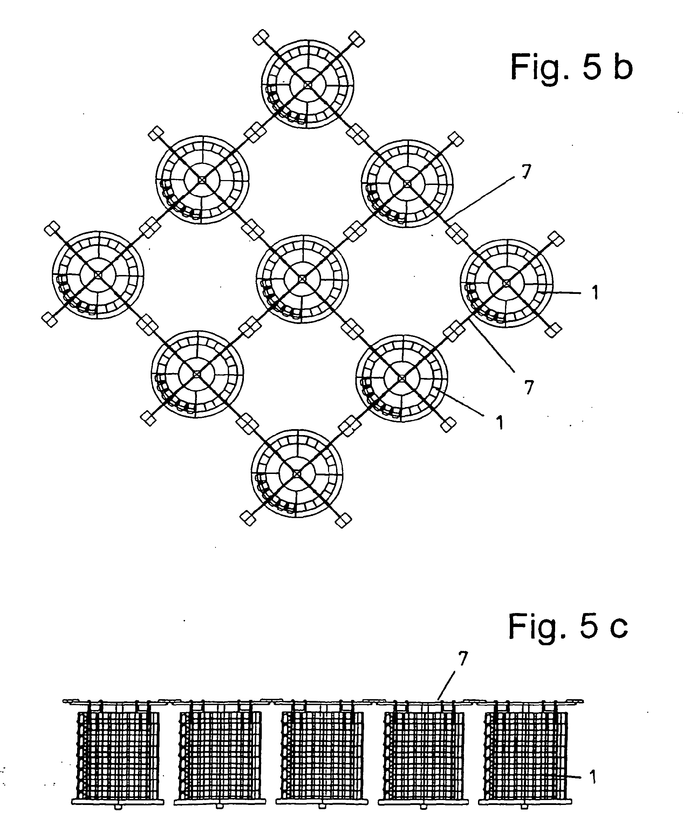

Die vierte Ausführungsform in Fig. 5a bis c basiert auf der dritten Ausführungsform in Fig. 4a bis f. Der Unterschied besteht darin, daß ein Netz von Schienen 7 vorgesehen ist. Diese Schienen 7 sind an der Decke angeordnet und stehen senkrecht aufeinander. In jedem Kreuzungspunkt befindet sich ein Gestell 1 mit Mantelsegmenten 2. Diese Mantelsegmente 2 sind in der zuvor beschriebenen Weise längs der Schienen 7 verfahrbar.

### Bezugszeichenliste

- 1: Gestell
- 2: Mantelsegment
- 3: Auffangwanne
- 4: Bodenrollen
- 5: Beleuchtungseinrichtung
- 6: Pflanztopf
- 7: Schiene

## Patentansprüche

1. Begehbare Vorrichtung zum Züchten von Pflanzen,
mit einem als Zylindermantel oder Polygonmantel ausgebildeten Gestell (1) zur Aufnahme von einzelnen Pflanzen sowie
mit einer Beleuchtungseinrichtung (5) zum Beleuchten der Pflanzen,
wobei das Gestell (1) um die zentral angeordnete Beleuchtungseinrichtung (5) herum angeordnet ist und
wobei die am Gestell (1) angeordneten Pflanzen zur Beleuchtungseinrichtung (5) hin gerichtet sind,
**dadurch gekennzeichnet,**
**daß** bei Gebrauch der Vorrichtung die Mittelachse des Gestells (1)vertikal ausgerichtet ist.

2. Vorrichtung nach Anspruch 1,
**dadurch gekennzeichnet,**
**daß** der Zylinder- oder Polygonmantel eine Mantelöffnung aufweist.

3. Vorrichtung nach Anspruch 1,
**dadurch gekennzeichnet,**
**daß** der Zylinder- oder Polygonmantel um den Umfang herum geschlossen ist und
**daß** wenigstens ein Mantelsegment (2) derart beweglich ist, daß das Innere des Mantels zugänglich ist.

4. Vorrichtung nach Anspruch 3,
**dadurch gekennzeichnet,**
**daß** der Zylinder- oder Polygonmantel aus mehreren Mantelsegmenten (2) besteht, welche beweglich, insbesondere von der zentralen Mitte weg bewegbar sind.

5. Vorrichtung nach Anspruch 3 oder 4,
**dadurch gekennzeichnet,**
**daß** die Mantelsegmente (2) auf Bodenrollen (4) verfahrbar sind.

6. Vorrichtung nach Anspruch 3 oder 4,
**dadurch gekennzeichnet,**
**daß** die Mantelsegmente (2) an oberseitigen Schienen (7) aufgehängt und längs diesen verfahrbar sind.

7. Vorrichtung nach Anspruch 6,
**dadurch gekennzeichnet,**
**daß** oberseitig ein Netz von Schienen (7) vorgesehen ist, an welchen die Mantelsegmente (2) einer Mehrzahl von Züchtungsvorrichtungen verfahrbar aufgehängt sind.

8. Vorrichtung nach einem der vorhergehenden Ansprüche,
**dadurch gekennzeichnet,**
**daß** das Gestell (1) ein Drahtgestell ist.

9. Vorrichtung nach einem der vorhergehenden Ansprüche,
**dadurch gekennzeichnet,**
**daß** das Gestell (1) unterseitig eine Auffangwanne (3) für Wasser aufweist.

## Claims

1. Accessible device for growing plants, comprising a frame (1) configured as a cylindrical casing or polygonal casing for receiving individual plants and comprising a lighting mechanism (5) for illuminating the plants, wherein the frame (1) is arranged around the centrally arranged lighting mechanism (5) and wherein the plants which are arranged on the frame (1) are directed toward the illuminating mechanism (5), **characterised in that** when the device is used, the central axis of the frame (1) is oriented vertically.

2. Device according to claim 1, **characterised in that** the cylindrical or polygonal casing has a casing opening.

3. Device according to claim 1, **characterised in that** the cylindrical or polygonal casing is closed around the periphery and **in that** at least one casing segment (2) is moveable in such a way that the interior of the casing is accessible.

4. Device according to claim 3, **characterised in that** the cylindrical or polygonal casing consists of a plurality of casing segments (2), which are moveable, in particular can be moved away from the centre.

5. Device according to claim 3 or 4, **characterised in that** the casing segments (2) can be moved on base rollers (4).

6. Device according to claim 3 or 4, **characterised in that** the casing segments (2) are suspended on rails (7) on the upper side and can be moved along them.

7. Device according to claim 6, **characterised in that** a network of rails (7) is provided at the top, on which the casing segments (2) of a plurality of growing devices are suspended so as to be moveable.

8. Device according to any one of the preceding claims, **characterised in that** the frame (1) is a wire frame.

9. Device according to any one of the preceding claims, **characterised in that** the frame (1) has a collecting trough for water at the bottom.

## Revendications

1. Dispositif accessible pour cultiver des plantes,
comprenant un bâti (1) conçu sous la forme d'une enveloppe cylindrique ou polygonale et destiné à recevoir des plantes individuelles, et un dispositif d'éclairage (5) pour éclairer les plantes,
le bâti (1) étant disposé autour du dispositif d'éclairage (5) placé au centre et les plantes installées sur le bâti (1) étant dirigées vers le dispositif d'éclairage (5), **caractérisé en ce que**, lorsque le dispositif est en fonction, l'axe médian du bâti (1) est orienté verticalement.

2. Dispositif selon la revendication 1, **caractérisé en ce que** l'enveloppe cylindrique ou polygonale présente une ouverture d'enveloppe.

3. Dispositif selon la revendication 1, **caractérisé en ce que** l'enveloppe cylindrique ou polygonale est fermée sur l'ensemble du pourtour, et **en ce qu'**au moins un segment d'enveloppe (2) est mobile de telle sorte que l'intérieur de l'enveloppe soit accessible.

4. Dispositif selon la revendication 3, **caractérisé en ce que** l'enveloppe cylindrique ou polygonale est composée de plusieurs segments d'enveloppe (2) mobiles, pouvant notamment être éloignés de la zone centrale.

5. Dispositif selon la revendication 3 ou 4, **caractérisé en ce que** les segments d'enveloppe (2) peuvent être déplacés sur des roulettes (4).

6. Dispositif selon la revendication 3 ou 4, **caractérisé en ce que** les segments d'enveloppe (2) sont accrochés à des rails (7) situés en haut et sont mobiles le long de ceux-ci.

7. Dispositif selon la revendication 6, **caractérisé en ce qu'**en haut est prévu un réseau de rails (7) auxquels sont accrochés de façon mobile les segments d'enveloppe (2) de plusieurs dispositifs de culture.

8. Dispositif selon l'une des revendications précédentes, **caractérisé en ce que** le bâti (1) est une structure en fil métallique.

9. Dispositif selon l'une des revendications précédentes, **caractérisé en ce que** le bâti (1) présente en bas un récipient collecteur (3) pour l'eau.
